# EUROPÄISCHE PATENTSCHRIFT

(11) **EP 3 439 832 B1**
(45) Veröffentlichungstag und Bekanntmachung des Hinweises auf die Patenterteilung: **02.12.2020**
(21) Anmeldenummer: 17716500.8
(22) Anmeldetag: 05.04.2017
(51) Int. Cl.: B25J 9/16, B25J 19/02, B25J 13/08, G01L 5/00, G01L 5/22

(54) **VERFAHREN ZUM ERFASSEN EINES PARAMETERS EINES VERSCHLUSSELEMENTES**
METHOD FOR DETECTING A PARAMETER OF A CLOSURE ELEMENT
PROCÉDÉ DE DÉTECTION D'UN PARAMÈTRE D'UN ÉLÉMENT DE FERMETURE

(30) Priorität: 08.04.2016 DE 102016106488
(43) Veröffentlichungstag der Anmeldung: 13.02.2019
(73) Patentinhaber: Battenberg Robotic GmbH & Co. KG, 35043 Marburg (DE)
(72) Erfinder: BATTENBERG, Günther, 35037 Marburg (DE)
(74) Vertreter: Stoffregen, Hans-Herbert
(86) Internationale Anmeldenummer: PCT/EP2017/058108
(87) Internationale Veröffentlichungsnummer: WO 2017/174655

(56) Entgegenhaltungen:
- WO-A1-00/40940
- WO-A1-2006/035259
- US-A- 5 627 767

## Beschreibung

Die Anmeldung bezieht sich auf ein Verfahren zum Erfassen zumindest eines charakteristischen Parameters, wie Schließkraft, Schließenergie oder Geschwindigkeitsverhalten, eines eine Öffnung verschließenden Verschlusselementes, insbesondere Tür eines Kraftfahrzeuges.

Insbesondere in hochtechnisierten Anlagen, Maschinen oder Fahrzeugen, bei denen Öffnungen durch Verschlusselemente wie Türen verschlossen werden sollen, ist es erforderlich, dass reproduzierbar Parameter erfassbar sind, die den Schließ- bzw. Öffnungsvorgang abbilden.

So gibt es mechanische Prüfsysteme, um z.B. die Schließbewegung einer Kraftfahrzeugtür zu erfassen. Ein entsprechendes System wird unter der Bezeichnung EZ Slam 2 der EZ-Metrology, USA, angeboten. Dabei wird bei einer Kraftfahrzeugtür die Bewegung kurz vor dem Schließvorgang erfasst. Die Möglichkeit, technische Daten zur Verfügung zu stellen, die den gesamten Schließ- bzw. Öffnungsvorgang betreffen, bestehen nicht. Die Türgeschwindigkeit wird nach dem bekannten Messverfahren mittels eines optischen Sensors erfasst, der Halterungen benötigt, die unmittelbar am Kraftfahrzeug befestigt werden. Die Türbewegung selbst wird manuell durchgeführt.

Ferner ist ein Testsystem zum Testen von Fahrzeugtüren der Kübrich Ingenieurgesellschaft mbH & Co. KG, Priesendorf, bekannt. Mit dem Testsystem können das dynamische Öffnen und Schließen einer Tür und parallel hierzu auch weitere Funktionen in der Tür wie Spiegel, Fensterheber getestet werden. Während des Tests sind mit der Tür Befestigungselemente verbunden, die mit einem Handhabungsgerät über den gesamten Bewegungsablauf der Tür fest verbunden sind. Hierzu werden insbesondere Saugnäpfe verwendet. Zum Testen muss das Fahrzeug stationär und in ortsfester Beziehung zu dem Handhabungsgerät angeordnet werden.

Gegenstand der WO 2012/125130 A1 ist eine Antriebseinrichtung für eine Kraftfahrzeugtür. Zum Betätigen wird ein Kraft- und Positionssensor benutzt.

Zur Erfassung der Position einer Tür wird nach der WO 2006/035259 ein berührungsloser Sensor benutzt, um ein automatisches Lackieren im Inneren und im Äußeren eines Kraftfahrzeuges zu ermöglichen.

Nach der US 5 627 767 A wird mittels einer Prüfvorrichtung die Schließbewegung einer Kraftfahrzeugtür überprüft. Dabei ist eine bleibende Verbindung zwischen Tür und Bewegungsmechanismus der Prüfvorrichtung erforderlich, um Kräfte in die Tür einleiten zu können.

Gegenstand der WO 00/40940 A1 ist ein Verfahren zur Überprüfung des Bewegungsablaufs eines Elementes mit vorgegebenen Werten. Es wird eine Kraft-Weg-Charakteristik aufgenommen, um den Bewegungsablauf zu ermitteln.

Die US 6,062,079 A bezieht sich auf eine Vorrichtung zur Prüfung einer Tür.

Gegenstand der WO 2012/142587 A1 ist ein ferngesteuertes Fahrzeug.

Eine Vorrichtung zum automatischen Befüllen eines Fahrzeuges wird in der WO 98/54084 A1 beschrieben.

Gegenstand der DE 38 33 105 A1 ist eine Türöffnungs- und Türschließvorrichtung für Kraftfahrzeuge, die einen Roboter umfasst, der zum Öffnen bzw. Schließen einer Tür eingesetzt wird.

Eine Antriebseinheit zur Prüfung von Getrieben und eine Vorrichtung zur Prüfung von Getrieben ist aus der DE 10 2007 048 530 A1 bekannt.

Die Dissertation "Entwicklung eines roboterbasierten Prüfstands für die Ermittlung der Langzeitbetriebsfestigkeit von beweglichen Karosserieteilen" von Jens Vogelpohl von 2013 bezieht sich auf einen gattungsbildenden Stand der Technik. Zur Bewegung einer Tür wird ein Roboterwerkzeug benutzt, das zur Außenbetätigung einen Finger zum Entriegeln des Türaußengriffs, ein Sensorelement zur Messung der Kraft am drehbar gelagerten Finger, Mitnehmer zum Aufschwenken der Tür, eine Linearführung für die Bewegung des Mitnehmers und Federdämpfersysteme zur Absorption von Schlägen auf den Mitnehmer aufweist.
Die DE 10 2014 009 A1 bezieht sich auf eine Vorrichtung zur räumlichen Ausrichtung eines berührungslos arbeitenden Messkopfes.
Die DE 43 12 565 A1 bezieht sich auf eine Biegemaschine zum Biegen flächiger Werkstücke.

Aufgabe der vorliegenden Erfindung ist es, die Schließ- und Öffnungsbewegung eines Verschlusselementes so zu erfassen, um reproduzierbare Aussagen über den Bewegungsablauf des Verschlusselementes und die insoweit wesentlichen Parameter treffen zu können.

Die Aufgabe wird durch das Verfahren gemäß Anspruch 1 gelöst. Sie wird im Wesentlichen dadurch gelöst, dass mittels eines Handhabungsgerätes in Form eines Knickarmroboters, dem Verschlusselement eine Bewegung aufgezwungen wird, ohne dass eine feste Verbindung zwischen dem Verschlusselement und dem als Knickarmroboter ausgebildeten Handhabungsgerät erforderlich ist, dass zumindest die beim Bewegen zwischen dem Verschlusselement und dem Knickarmroboter wechselwirkende Kraft mittels eines in dem Knickarmroboter integrierten ersten Sensors ermittelt wird. Dabei werden mittels eines kontaktlos arbeitenden zweiten Sensors eine oder mehrere Positionsveränderungen des Verschlusselementes während des Bewegungsablaufs erfasst. Kraftangriffspunkt und relative Orientierung des Elements zu dem Verschlusselement unverändert bleibt.

Es erfolgt erfindungsgemäß eine knickarmrobotergestützte Verschlusselementprüfung, bei der der Knickarmroboter ein Verschlusselement definiert und reproduzierbar schließt bzw. öffnet, um gleichzeitig mit intelligenter Sensorik Messgrößen erfassen zu können.

Dabei ist es nicht erforderlich, dass eine feste Verbindung zwischen Tür und Knickarmroboter vorliegt. Vielmehr ist es nur erforderlich, dass der Knickarmroboter während der Krafteinleitung das Verschlusselement kontaktiert. So ist auch erfindungsgemäß vorgesehen, dass zumindest vor dem Schließvorgang das Wechselwirken zwischen dem Verschlusselement und dem Knickarmroboter aufgehoben wird. Das Verschlusselement bewegt sich, ohne dass ein Kontakt mit dem Knickarmroboter besteht. Dadurch, dass zwischen dem Knickarmroboter und dem Verschlusselement nur ein Kontakt bestehen muss, ohne dass es einer Befestigung bedarf, kann in gewünschten Bereichen des Verschlusselementes die Krafteinleitung erfolgen, ohne dass auf die Form oder konstruktive Gestaltungen des Verschlusselementes im Angriffspunkt zu achten ist; denn das Verschlusselement muss nicht z. B. über Saugnäpfe oder andere gleichwirkende Befestigungselemente mit dem Verschlusselement während der Krafteinleitung verbunden sein.

Dabei nutzt man als ersten Sensor einen in dem Knickarmroboter - nachstehend vereinfacht Roboter genannt - integrierten Sensor, mittels dessen Kraft- bzw. Drehmomente erfassbar sind. Ein diesbezüglicher Sensor ist in einem Roboterarm bzw. -flansch integriert, über den auf ein Verschlusselement wie Kraftfahrzeugtür im erforderlichen Umfang Kräfte übertragen werden. Es besteht die Möglichkeit, mit definierter Beschleunigung bzw. Geschwindigkeit über einen definierten Weg das Verschlusselement zu schließen.

Dabei besteht insbesondere die Möglichkeit, Weg, Beschleunigung bzw. Geschwindigkeit derart auszuwählen, dass der Roboter bzw. das auf das Verschlusselement einwirkende und von dem Roboter ausgehende Element bzw. Bauteil bzw. Werkzeug mit langsamer Geschwindigkeit das Verschlusselement komplett schließt oder das Verschlusselement mit hoher Beschleunigung über einen Weg hinweg wechselwirkend führt, damit sodann das Verschlusselement ohne weitere Einwirkung des Roboters die Öffnung verschließt, also z.B. in ein Schloss fällt. Durch den in dem Roboter bzw. am Flansch vorhandenen zumindest einen ersten Sensor besteht die Möglichkeit, die während der Bewegung auftretenden Kräfte und Drehmomente in Echtzeit zu erfassen.

Somit können mittels einer Echtzeitbewegung die gemessenen Kräfte über die zurückgelegten Wege aufintegriert werden, so dass die tatsächlich geleistete Arbeit entlang der durchgeführten Bewegung ermittelbar ist. Es besteht somit auch die Möglichkeit, mit einer vordefinierten Schließenergie das Verschlusselement mittels des Roboters schließen zu lassen bzw. z.B. eine Kraftfahrzeugtür in ein Schloss einrasten zu lassen.

Dabei wird das Verschlusselement von dem Roboter so lange bewegt, bis die aufintegrierte Arbeit die vorgegebene Energieschwelle erreicht hat. Anschließend wird die Bewegung des Roboters unterbrochen, so dass mit hinreichend großer Beschleunigung das Verschlusselement die Öffnung allein schließen kann, also im Falle eines Kraftfahrzeuges die Tür von alleine in das Schloss fällt.

Die Erfindung zeichnet sich daher auch dadurch aus, dass vor dem Schließvorgang die Wechselwirkung zwischen dem Verschlusselement und dem Knickarmroboter aufgehoben, also unterbrochen wird.

Insbesondere ist vorgesehen, dass mittels des zweiten Sensors ein Teil des Bewegungsablaufs oder der gesamte Bewegungsablauf des Verschlusselementes sowohl während als auch nach der über den Knickarmroboter auf das Verschlusselement einwirkenden Kraft ermittelt wird.

In Weiterbildung sieht die Erfindung vor, dass mittels des zweiten Sensors Ruhezustand wie Schließzustand des Verschlusselements ermittelt wird.

Als zweiter Sensor wird ein kontaktlos arbeitender Sensor wie Laserliniensensor verwendet, mittels dessen der Verlauf des Verschlusselementes während dessen Bewegung ermittelt wird.

Insbesondere ist vorgesehen, dass das Verschlusselement beim Öffnen bzw. Schließen um eine Achse geschwenkt wird, die von einem Bauteil ausgeht, das ortsfest zu dem zweiten Sensor angeordnet ist. Dabei wird während des Schließens und/oder Öffnens des Verschlusselementes dessen Winkel zu dem Bauteil mittels des zweiten Sensors gemessen.

Es wird folglich während der Bewegung des Verschlusselementes mittels des zweiten Sensors der Verlauf des Winkels gemessen, der zwischen dem Verschlusselement und dem ortsfesten Bauteil eingeschlossen wird.

Hierzu wird im Falle des Laserliniensensors als zweiter Sensor dieser derart positioniert, dass ein Abschnitt der Laserlinie das in Bezug auf den zweiten Sensor ortsfeste Bauteil und der verbleibende Abschnitt das Verschlusselement erfasst.

Im Falle eines Kraftfahrzeuges ist die Laserlinie derart ausgerichtet, dass ein Abschnitt auf die Karosserie wie z.B. Kotflügel als das ortsfeste Bauteil und der verbleibende Abschnitt auf die Tür fällt. Bei geschlossener Tür erhält man ein durchgehendes Linienprofil - gegebenenfalls unter Berücksichtigung eines Türspaltes -. Bei nicht geschlossener Tür bilden die Abschnitte der Geraden der Laserlinie einen Winkel, der direkt mit dem Türöffnungswinkel korreliert. Dabei wird während des Schließens und/oder Öffnens des Verschlusselementes dessen Winkel zu dem Bauteil mittels des zweiten Sensors gemessen. Es wird folglich während der Bewegung des Verschlusselementes mittels des Sensors der Verlauf des Winkels gemessen, der zwischen dem Verschlusselement und dem ortsfesten Bauteil eingeschlossen wird.

Somit kann bei hoher Abtastrate der zeitliche Verlauf der zueinander bewegten Abschnitte oder Teilgeraden der Laserlinie gemessen werden, um den Türöffnungswinkel gegenüber der Zeit zu ermitteln. Aus dem gemessenen zeitlichen Verlauf der Änderung des Türwinkels lässt sich durch Differenzieren die Winkelgeschwindigkeit der Tür in Abhängigkeit der Zeit bestimmen.

Somit besteht die Möglichkeit, die Schließ- bzw. Öffnungsgeschwindigkeit über den gesamten Bewegungsverlauf hinweg zu erfassen.

Ein weiterer Vorteil besteht bei dem Einsatz eines Laserliniensensors darin, dass die Messung kontaktlos erfolgt, so dass abweichend vom Stand der Technik kein Objekt wie Halterung an der Tür bzw. Türrahmen oder an einem sonstigen Bauteil befestigt werden muss.

Ausschlaggebend ist des Weiteren, dass die Bewegung definiert und reproduzierbar durch den Roboter durchgeführt wird. Erwähntermaßen werden nach dem Stand der Technik Türen durch einen Menschen zugeworfen, wodurch ein erhebliches Fehlerpotential erzeugt wird.

Die Erfindung zeichnet sich insbesondere daher auch dadurch aus, dass mittels des ersten Sensors und/oder des zweiten Sensors der gesamte oder nahezu gesamte Bewegungsablauf des Verschlusselementes erfasst wird.

Insbesondere ist die erfindungsgemäße Lehre auf das Schließ- bzw. Öffnungsverhalten einer Kraftfahrzeugtür anwendbar. Dabei besteht auch die Möglichkeit, dass eine Messung während des Bewegens des Kraftfahrzeuges, also während der Produktion erfolgt bzw. wenn die Kraftfahrzeuge bzw. die Karosserie auf einem fahrerlosen Transportsystem getragen wird. Hierzu schlägt die Erfindung vor, dass der Roboter synchron mit der Bewegung des Kraftfahrzeuges mitbewegt wird.

In Weiterbildung der Erfindung wird vorgeschlagen, dass die Position des Verschlusselementes ermittelt wird und dass der Knickarmroboter mit dem Verschlusselement in Abhängigkeit von ermittelter Position mit dem Verschlusselement wechselwirkt. Dabei ist insbesondere vorgesehen, dass der Knickarmroboter unabhängig von der Stellung des Verschlusselementes auf denselben oder nahezu denselben Bereich auf das Verschlusselement einwirkt.

Ferner ist insbesondere vorgesehen, dass die relative Orientierung zwischen dem Verschlusselement und dem Knickarmroboter bzw. dem von dem Knickarmroboter ausgehenden und mit dem Verschlusselement verbundenen Element bzw. Bauteil in dem Angriffspunkt, also in dem einwirkenden Bereich oder Punkt stets gleich ist, und zwar unabhängig von der Position des Verschlusselementes.

Bevorzugterweise sieht hierzu die Erfindung vor, dass der mit dem Knickarmroboter wechselwirkende Bereich des Verschlusselementes durch eine Markierung an dem Verschlusselement vorgegeben wird, dass mittels einer Sensorik Koordinaten der Markierung bestimmt werden und dass unabhängig von der Stellung des Verschlusselementes das Knickarmroboter im erforderlichen Umfang mit der Markierung oder einem sonstigen gleichbleibenden Bereich und damit mit dem Verschlusselement wechselwirkt.

Insbesondere sieht die Erfindung vor, dass in zumindest drei unterschiedlichen Stellungen des Verschlusselementes die jeweiligen Positionskoordinaten der Markierung ermittelt werden, und dass aus den in den zumindest drei Stellungen ermittelten Positionskoordinaten die Bewegungsbahn des Verschlusselementes berechnet wird. Dabei werden die Koordinaten mittels einer Sensorik in Koordinaten des Koordinatensystems des Knickarmroboters berechnet.

Zur Erzielung einer gewünschten Reproduzierbarkeit der Messergebnisse zeichnet sich die Erfindung insbesondere auch dadurch aus, dass die Wirkrichtung der von dem Knickarmroboter auf die Markierung einwirkenden Kraft unabhängig von der Stellung des Verschlusselementes gleich ist. Hierzu wird mit einer insbesondere optischen Sensorik eine Fläche des Verschlusselementes ermittelt, in der z.B. die Markierung vorhanden ist oder die durch die Markierung aufgespannt wird, um sodann mittels eines Messstrahls eine Richtung zu ermitteln, die der Wirkrichtung der auf die Markierung einwirkenden Kraft entspricht. Durch die so ermittelten Koordinaten im Koordinatensystem des Roboters und den bekannten Verlauf der Schließbewegung des Verschlusselementes ist sichergestellt, dass unabhängig von der Stellung des Verschlusselementes im gleichen Bereich des Verschlusselementes die Kraft eingeleitet wird, an dem sich die reale oder eine virtuelle Markierung befindet, wobei die Wirkrichtung stets gleich ist, also der Vektor in Bezug auf die Markierung gleiche Richtung aufweist.

Damit beim Wechselwirken zwischen dem Roboter bzw. dem von diesem ausgehenden Bauteil, das auf das Verschlusselement einwirkt, und dem Verschlusselement letzteres nicht beschädigt wird, ist insbesondere vorgesehen, dass der Knickarmroboter bzw. das Bauteil gleitend auf dem Verschlusselement abgestützt ist. Hierzu kann ein Rad oder eine Rolle vorgesehen sein.

Auf Grund der erfindungsgemäßen Lehre sind insbesondere folgende Verfahren durchführbar:
- es besteht die Möglichkeit eines reproduzierbaren Messens der Kraft-Weg- oder Kraft-Verschlusswinkel-Kennlinie bei langsamer Betätigung des Verschlusselementes durch den Knickarmroboter über den kompletten Betätigungsweg. Dabei besteht auch die Möglichkeit, die Kennlinien beim Öffnen des Verschlusselementes zu ermitteln. Hierzu kann das Verschlusselement über ein Werkzeug z. B. mit einem Sauger starr mit dem Knickarmroboter gekoppelt sein, so dass infolgedessen sowohl die Kennlinien beim Schließen als auch beim Öffnen des Verschlusselementes gemessen werden können. Diesbezügliche Prüfungen sind für das Labor von Interesse.
- es besteht die Möglichkeit, reproduzierbar zu prüfen, ob ein Verschlusselement, bei einer bestimmten vordefinierten Schließenergie, Beschleunigung oder Geschwindigkeit, die durch den Knickarmroboter eingebracht wird, zufällt bzw. ins Schloss fällt oder nicht. Eine diesbezügliche Prüfung ist insbesondere für die Produktion von Interesse.
- es besteht die Möglichkeit, ein Verschlusselement zuzuwerfen mit definierter Schließenergie, Beschleunigung oder Geschwindigkeit bei gleichzeitiger Messung der Geschwindigkeits-Verschlusselementwinkel-Kennlinie mittels des zweiten Sensors, insbesondere eines berührungslos arbeitenden Sensors wie Laserliniensensors. Durch iterative Versuche kann ferner festgestellt werden, wie groß die Mindestschließenergie sein muss, damit das Verschlusselement schließt bzw. sicher ins Schloss fällt. Alternativ besteht auch die Möglichkeit, die Mindestendgeschwindigkeit des Verschlusselementes zu ermitteln, damit das Verschlusselement noch sicher schließt bzw. sicher ins Schloss fällt. Diesbezügliche Prüfungen sind insbesondere für das Labor von Interesse.
- es besteht die Möglichkeit festzustellen, ob das Verschlusselement ordnungsgemäß zu der zu schließenden Öffnung ausgerichtet ist. Liegt eine fehlerhafte Ausrichtung vor, so ergeben sich Schließkräfte, die außerhalb vorgegebener Werte liegen. Diesbezügliche Messungen sind insbesondere für die Produktion von Interesse.

Werden Messungen in Produktionsanlagen für Kraftfahrzeuge durchgeführt, so wird die genaue Lage des zu messenden Fahrzeuges über geeignete Sensoren eingemessen, wie z.B. durch Kameras oder Lasersensoren. Die Schließbewegung der Tür, also das Einwirken des Roboters wird sodann an die Position des Kraftfahrzeuges angepasst.

Insbesondere für Laboranwendungen besteht erwähntermaßen die Möglichkeit, mit einem einfachen Prozess sicherzustellen, dass reproduzierbare Schließbewegungen eines Verschlusselementes, insbesondere die Schließbewegung einer Kraftfahrzeugtür erfasst und die relevanten Parameter ermittelt werden, ohne dass die Position des Fahrzeugs genau erfasst werden muss. Hierzu ist der Angriffspunkt für den Roboter virtuell oder durch eine Markierung bzw. einen Marker auf der Tür festgelegt, der über eine Sensorik erfasst wird, um sodann mit Hilfe von geregelten Roboterbewegungen direkt die Koordinaten der Markierung im Roboterkoordinatensystem zu bestimmen. Dies wird für zumindest drei verschiedene Türöffnungswinkel durchgeführt, um die Bahntrajektorie für den Roboter zum Schließen der Tür direkt und automatisch zu bestimmen.

Ein selbstständiger Lösungsvorschlag sieht vor ein Verfahren zum Erfassen zumindest eines charakteristischen Parameters, wie Schließkraft oder -energie oder Geschwindigkeitsverhalten, eines eine Öffnung verschließenden Verschlusselementes, insbesondere Tür eines Kraftfahrzeugs, das sich dadurch auszeichnet, dass mittels eines Knickarmroboters dem Verschlusselement eine Bewegung aufgezwungen wird und dass zumindest die bei der Bewegung zwischen dem Verschlusselement und dem Knickarmroboter wechselwirkende Kraft mittels eines in dem Knickarmroboter integrierten ersten Sensors ermittelt wird, wobei Wirkrichtung der von dem Knickarmroboter auf das Verschlusselement einwirkenden Kraft unabhängig von der Stellung des Verschlusselementes gleich ist.

Auch zeichnet die Erfindung sich aus durch ein Verfahren zum Erfassen zumindest eines charakteristischen Parameters, wie Schließkraft oder -energie oder Geschwindigkeitsverhalten, eines eine Öffnung verschließenden Verschlusselementes, insbesondere Tür eines Kraftfahrzeugs, wobei das Verfahren dadurch gekennzeichnet ist, dass mittels eines Knickarmroboters dem Verschlusselement eine Bewegung aufgezwungen wird, dass zumindest die bei der Bewegung zwischen dem Verschlusselement und dem Knickarmroboter wechselwirkende Kraft mittels eines in dem Knickarmroboter integrierten ersten Sensor ermittelt wird, und dass die Wechselwirkung zwischen dem Verschlusselement und dem Knickarmroboter aufgehoben wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine Prinzipdarstellung eines Fahrzeuges sowie eines Roboters, der Kräfte in eine zu schließende Tür einleitet,
- Fig. 2: eine Prinzipdarstellung eines Roboters in Wechselwirkung mit einer Kraftfahrzeugtür in verschiedenen Positionen,
- Fig. 3: Kraft-Türwinkel-Kennlinie einer zu schließenden Tür,
- Fig. 4: Geschwindigkeit-Türwinkel-Kennlinie einer zu schließenden Kraftfahrzeugtür und
- Fig. 5, 6: Bewegungsabläufe

Erfindungsgemäß wird mittels eines Knickarmroboters- nachstehend Roboter genannt - eine robotergestützte Prüfung von Kraftfahrzeugtüren erläutert, ohne dass durch das Anwendungsbeispiel Kraftfahrzeugtür die erfindungsgemäße Lehre eingeschränkt wird. Vielmehr gilt die Erfindung für jegliche Verschlusselemente.

Mittels eines Roboters 10 wird eine Tür 12 eines Kraftfahrzeugs 14 definiert und reproduzierbar geschlossen, um sodann mithilfe intelligenter Sensorik verschiedene Messgrößen erfassen zu können. Der Roboter 10 weist an einem Arm 16 ein Element bzw. Bauteil wie Werkzeug 18 auf, so dass Kräfte in die Tür 12 eingeleitet werden, um diese zu bewegen und insbesondere in ein Schloss des Kraftfahrzeugs 14 fallen zu lassen. Hierdurch können vordefinierte Schließenergien, Beschleunigungen oder Geschwindigkeiten eingebracht bzw. erzeugt werden.

Um die Kraft zu ermitteln, weist der Roboter 10 einen entsprechenden Kraft- bzw. Drehmomentsensor 20 auf, wie dies zum Stand der Technik gehört. Dabei ist erfindungsgemäß vorgesehen, dass das Werkzeug 18 unabhängig von der Position der Tür 12 stets im gleichen Punkt 22 mit der Tür 12 wechselwirkt, wobei die Wirkrichtung der einzuleitenden Kraft gleichfalls unabhängig von der Position der Tür 12 gleich ist. Hierzu wird zuvor ein Angriffspunkt 22 festgelegt, z.B. durch eine Markierung. Der Angriffspunkt 22 wird erfasst und dessen Koordinaten werden in den Koordinaten des Koordinatensystems des Roboters 10 ermittelt.

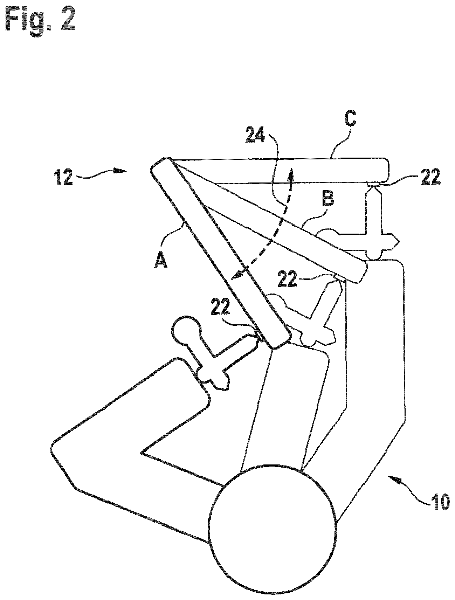

Wie sich aus der Fig. 2 ergibt, werden die Koordinaten der Markierung 22 in drei Positionen A, B, C der Tür 12 ermittelt, um die Bahnbewegung 24 zu ermitteln, um reproduzierbare Ergebnisse zu erzielen.

Hierzu kann die Markierung 22 von einer optischen Sensorik erfasst und zu der von der Markierung aufgespannten Ebene ein Messstrahl ausgerichtet werden, der mit der Wirkrichtung der einzuleitenden Kraft zusammenfällt. Hierdurch ist eine eindeutige Positionsermittlung der Markierung 22 unabhängig von dem Öffnungswinkel der Tür 12 möglich. Es werden von drei Positionen die Koordinaten des Wirkpunktes ermittelt, auf den der Roboter einwirkt. Somit kann die Bewegungsbahn des Wirkpunktes und damit die der Tür 12 berechnet werden. Während des Wechselwirkens des Roboters 10 mit der Tür 12 wirkt der Roboter 10 im gleichen oder nahezu gleichen Bereich auf die Tür 12 ein.

Der Wirkpunkt kann mit der Markierung 22 zusammenfallen, wobei die Markierung 22 nicht notwendigerweise ein auf die Tür 12 befestigtes wie geklebtes optisch erfassbares Kennzeichen sein muss. Vielmehr kann die Markierung auch ein individualisierender Bereich der Tür 12 wie Schlossöffnung oder in der Tür 12 integriertes optisch erfassbares Element wie Sensor sein.

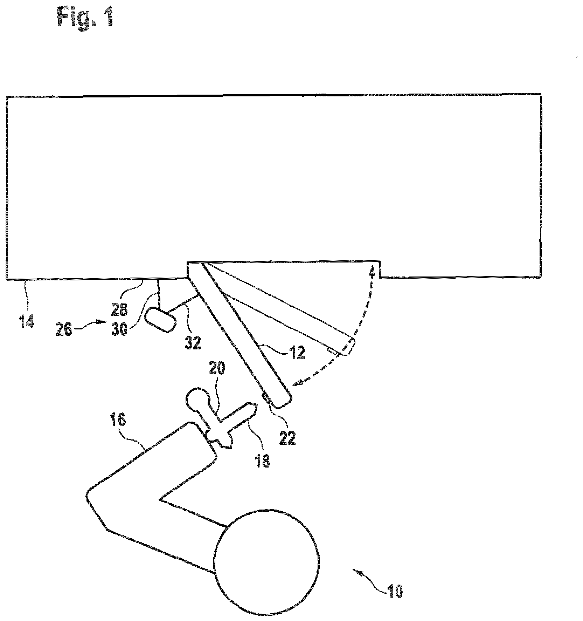

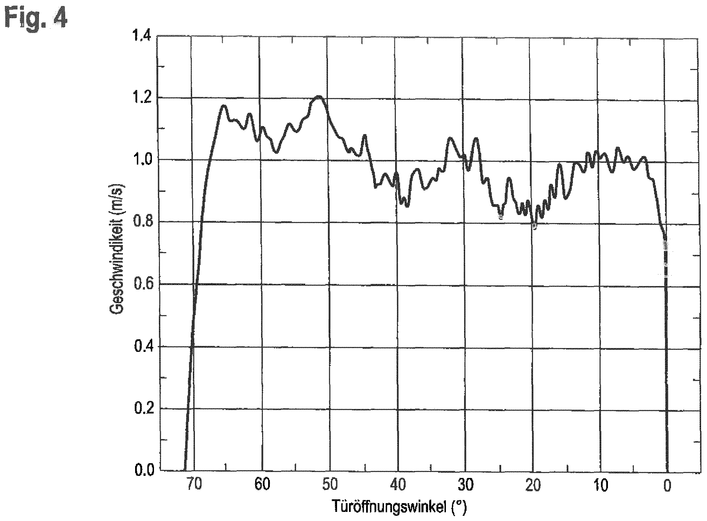

Um den Öffnungswinkel der Tür 12 zu ermitteln, ist gemäß der Fig. 1 ein zweiter Sensor in Form eines Laserliniensensors 26 vorgesehen, mittels dessen der Verlauf des Türwinkels während der Türbewegung gemessen wird. Hierzu wird der Laserliniensensor 26 derart positioniert, dass ein Teil bzw. Abschnitt der Laserlinie auf einem ortsfesten Bereich des Kraftfahrzeugs 14, also auf der Karosserie wie Kotflügel 28 auftrifft und der verbleibende Bereich bzw. restliche Teil des Strahls die Tür 12 erfasst. Im Ausführungsbeispiel sind dies die Abschnitte 30 und 32. Bei geschlossener Tür 12 würde man somit ein durchgängiges Linienprofil unter Berücksichtigung eines Türspalts ermitteln. Bei geöffneter Tür 12 bilden die Teilabschnitte oder Geraden 30, 32 des Profils einen Winkel, der direkt mit dem Türöffnungswinkel korreliert. Wird mit hoher Abtastrate der zeitliche Verlauf der Abschnitte 30, 32, also der Teilgeraden gemessen, so kann der Türöffnungswinkel gegen die Zeit aufgezeichnet werden. Aus dem gemessenen Verhalten des Türöffnungswinkels gegen die Zeit lässt sich durch Differenzieren die Winkelgeschwindigkeit der Tür 12 in Abhängigkeit der Zeit bestimmen, wie sich dies aus der Fig. 4 ergibt. Somit lässt sich - wie die Fig. 4 auch verdeutlicht - die Türgeschwindigkeit über den gesamten Bewegungsverlauf hinweg erfassen.

Dabei erfolgt ein kontaktloses Messen, so dass Messverfälschungen ausgeschlossen sind. Ferner erfolgt die Bewegung definiert und reproduzierbar durch den Roboter 10.

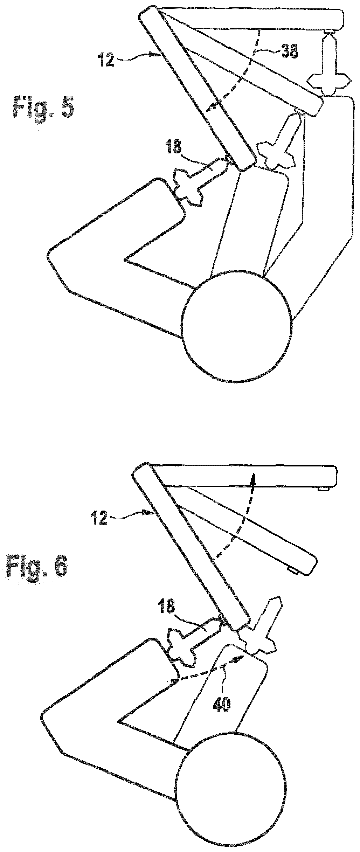

Der Öffnungswinkel der Tür 12 kann jedoch auch dadurch ermittelt werden, dass die Trajektorie, also die Bewegungsbahn der Tür zuvor eingelernt wird. Dies wird anhand der Fig. 5 verdeutlicht. So ist z.B. der Roboter bzw. das von diesem ausgehende Werkzeug 18 mit der Tür 12 beim Öffnen bleibend verbunden. Dies kann z.B. über Saugnäpfe erfolgen. Die Tür 12 wird sodann sensorgesteuert aufgezogen. Angriffspunkt und relative Orientierung des Werkzeugs 18 zur Oberfläche der Tür 12 bleiben unverändert. Die so ermittelte Trajektorie ermöglicht sodann den Öffnungswinkel zu bestimmen.

In Fig. 6 wird noch einmal erläutert, dass das Werkzeug bei gleichbleibender Orientierung im gleichbleibenden Angriffspunkt auf die Tür 12 die Schließbewegung der Tür 12 einleitet. Im Ausführungsbeispiel bewegt sich das Werkzeug entlang eines Abschnittes 40 der eingelernten Trajektorie 38. Am Ende des Abschnitts 14 wird der Kontakt der Tür 12 zu dem Werkzeug 18 aufgehoben, so dass sodann in Abhängigkeit von den über das Werkzeug 18 eingeleiteten Kräften bzw. Energien Kenndaten der Tür 12 hinsichtlich z.B. der Schließfähigkeit und/oder Geschwindigkeit bzw. Beschleunigung oder Schließenergie ermittelt werden.

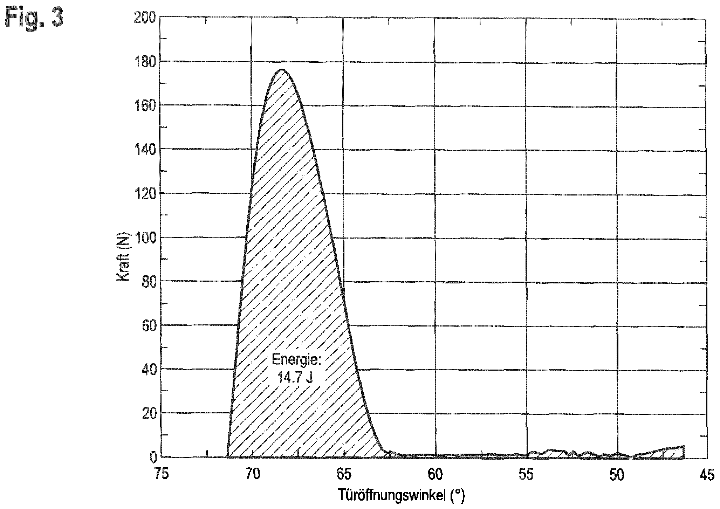

Aus der Fig. 3 ergibt sich, dass die Schließenergie ermittelt werden kann, die benötigt wird, damit die Tür 12 ins Schloss fällt. Um die genaue Energie zu ermitteln, werden iterative Versuche durchgeführt, um die Mindestschließenergie zu erfassen, also diejenige, die erforderlich ist, damit die Tür 12 auch sicher ins Schloss fällt. Hierzu ist es nur erforderlich, dass die in die Tür 12 eingeleitete Kraft über den zurückgelegten Weg aufintegriert wird, um eine Aussage über die aktuell geleistete Arbeit und somit eingebrachte Energie entlang der Türbewegung zu erhalten. Der Roboter 10 bewegt die Tür 12 solange, bis die aufintegrierte Arbeit eine vorgegebene Energieschwelle erreicht hat. Sodann wird der Roboter 10 in seiner Bewegung angehalten, so dass die Tür 12 ohne weitere Krafteinwirkung die Schließbewegung durchführt. Somit kann durch sukzessives Ändern der eingebrachten Energie festgestellt werden, wann die Tür 12 auch sicher in das Schloss des Fahrzeugs 14 fällt.

Mittels des zweiten Sensors 26 besteht auch die Möglichkeit, Nachschwingzeiten einer Tür 12 zu ermitteln. Hierdurch lassen sich Rückschlüsse auf die Passgenauigkeit der Tür 12 ziehen.

Zusätzlich kann das Spaltmaß zwischen Tür 12 und Karosserie ermittelt werden. Hierzu kann ein optischer Sensor benutzt werden, der in dem Roboter 10 integriert ist.

Insbesondere kann das Spaltmaß an der Tür 12 über den Liniensensor 26 ermittelt werden.

Der Liniensensor 26 kann auch benutzt werden, um den Schließzustand der Tür zu erfassen.

Es besteht auch die Möglichkeit, der Steuerung des Roboters 10 Informationen zuzuleiten, welche Tür 12 welchen Kraftfahrzeugtyps zu überprüfen ist, wobei auch eine virtuelle Markierung vorgegeben werden kann, in die der Roboter 10 Kräfte einleiten soll.

Damit beim Wechselwirken zwischen dem Roboter 10 und der Tür 12 letztere nicht beschädigt wird, ist insbesondere vorgesehen, dass der Roboter 10 oder das mit der Tür 12 wechselwirkende und von dem Roboter 10 ausgehende Element gleitend auf die Tür 12 einwirkt. Hierzu kann eine Rolle oder ein Rad vorgesehen sein.

## Patentansprüche

1. Verfahren zum Erfassen zumindest eines charakteristischen Parameters, wie Schließkraft, Schließenergie oder Geschwindigkeitsverhalten, eines eine Öffnung verschließenden Verschlusselementes (12), insbesondere Tür eines Kraftfahrzeugs (14), wobei mittels eines Knickarmroboters (10) dem Verschlusselement (12) eine Bewegung aufgezwungen wird, ohne dass eine feste Verbindung zwischen dem Verschlusselement und dem Knickarmroboter (10) erforderlich ist, wobei zumindest die bei der Bewegung zwischen dem Verschlusselement und dem Knickarmroboter (10) wechselwirkende Kraft mittels eines in dem Knickarmroboter (10) integrierten ersten Sensors (20) ermittelt wird und wobei mittels eines zweiten Sensors (26) Positionsveränderungen des Verschlusselementes (12) während des Bewegungsablaufs erfasst werden,
**dadurch gekennzeichnet,**
**dass** mittels des ersten Sensors (20) die bei der Bewegung zwischen dem Verschlusselement (12) und dem Knickarmroboter (10) auftretenden Kräfte und Drehmomente in Echtzeit gemessen werden, dass die Wirkrichtung der von dem Knickarmroboter (10) auf das Verschlusselement (12) einwirkenden Kraft unabhängig von der Stellung des Verschlusselementes gleich ist, und dass mittels des kontaktlos arbeitenden zweiten Sensors (26) Verlauf des Winkels zwischen dem Verschlusselement und einem ortsfest zu dem zweiten Sensor (26) angeordneten Bauteil gemessen wird, oder dass Positionsveränderungen des Verschlusselements unter Zugrundelegung einer eingelernten Bewegungsbahn des Verschlusselements erfasst werden.

2. Verfahren nach Anspruch 1,
**dadurch gekennzeichnet,**
**dass** mittels des zweiten Sensors (26) ein Teil des Bewegungsablaufs oder der gesamte Bewegungsablauf des Verschlusselementes (12) sowohl während als auch nach der über den Knickarmroboter (10) auf das Verschlusselement einwirkenden Kraft ermittelt wird.

3. Verfahren nach Anspruch 1 oder 2,
**dadurch gekennzeichnet,**
**dass** mittels des zweiten Sensors (26) Ruhezustand, wie Schließzustand, des Verschlusselements (12) ermittelt wird.

4. Verfahren nach zumindest einem der vorhergehenden Ansprüche,
**dadurch gekennzeichnet.**
**dass** als erster Sensor ein Kraft- oder Drehmomentsensor (20) und/oder als zweiter Sensor ein Laserliniensensor (26) verwendet wird.

5. Verfahren nach zumindest einem der vorhergehenden Ansprüche,
**dadurch gekennzeichnet,**
**dass** über den Knickarmroboter (10) eine vordefinierte Energie in das Verschlusselement (12) eingeleitet wird.

6. Verfahren nach zumindest einem der vorhergehenden Ansprüche, wobei das Verschlusselement (12) beim Öffnen und Schließen um eine Achse geschwenkt wird, die von einem Element ausgeht, das ortsfest zu dem zweiten Sensor (26) angeordnet ist,
**dadurch gekennzeichnet,**
**dass** während des Schließens und/oder Öffnens des Verschlusselementes (12) dessen Winkel zu dem Element mittels des zweiten Sensors (26) gemessen wird.

7. Verfahren nach zumindest einem der vorhergehenden Ansprüche, wobei das Verschlusselement eine Tür (12) eines Kraftfahrzeuges (14) ist, das während der Erfassung des zumindest einen charakteristischen Parameters bewegt wird,
**dadurch gekennzeichnet,**
**dass** während der Erfassung des zumindest einen charakteristischen Parameters der Knickarmroboter (10) synchron mit dem Kraftfahrzeug (14) bewegt wird.

8. Verfahren nach zumindest einem der vorhergehenden Ansprüche,
**dadurch gekennzeichnet,**
**dass** der Knickarmroboter (10) über ein Gleitelement wie Rolle oder Rad mit dem Verschlusselement (12) wechselwirkt.

9. Verfahren nach zumindest einem der vorhergehenden Ansprüche,
**dadurch gekennzeichnet,**
**dass** der Knickarmroboter (10) unabhängig von der Position des Verschlusselementes (12) auf denselben oder nahezu denselben Bereich des Verschlusselementes einwirkt.

10. Verfahren nach zumindest einem der vorhergehenden Ansprüche,
**dadurch gekennzeichnet,**
**dass** der mit dem Knickarmroboter (10) wechselwirkende Bereich (22) des Verschlusselementes (12) durch eine Markierung (22) an dem Verschlusselement vorgegeben wird, deren Koordinaten mittels einer Sensorik in Koordinaten des Koordinatensystems des Knickarmroboters (10) ermittelt werden.

11. Verfahren nach zumindest einem der vorhergehenden Ansprüche,
**dadurch gekennzeichnet,**
**dass** in zumindest drei verschiedenen Stellungen des Verschlusselementes (12) jeweilige Koordinaten der Markierung (22) ermittelt werden und aus den zumindest drei Stellungen die Bewegungsbahn des Verschlusselementes berechnet wird.

12. Verfahren nach zumindest einem der vorhergehenden Ansprüche,
**dadurch gekennzeichnet,**
**dass** vor dem Schließvorgang des Verschlusselementes (12) die Wechselwirkung zwischen dem Verschlusselement und dem Knickarmroboter (10) aufgehoben wird.

13. Verfahren nach zumindest einem der vorhergehenden Ansprüche,
**dadurch gekennzeichnet,**
**dass** zum Einlernen einer Trajektorie ein von dem Knickarmroboter (10) ausgehendes Element (18) kraftschlüssig mit dem Verschlusselement (12) während eines Öffnungs- oder Schließvorgangs verbunden wird und während des Öffnungs-oder Schließvorgangs Kraftangriffspunkt und relative Orientierung zu dem Verschlusselement unverändert bleibt.

## Claims

1. Method for detecting at least one characteristic parameter, such as closing force, closing energy or speed behavior, of a closure element (12) closing an opening, in particular a door of a motor vehicle (14), where a movement is forced on the closure element (12) by means of an articulated-arm robot (10) without a fixed connection between the closure element and the articulated-arm robot (10) being required, where at least the force interacting between the closure element and the articulated-arm robot (10) during the movement is determined by means of a first sensor (20) integrated in the articulated-arm robot (10), and where positional changes of the closure element (12) during the movement sequence are detected by means of a second sensor (26),
**characterized in that**
the forces and torques occurring during the movement between the closure element (12) and the articulated-arm robot (10) are measured in real time by means of the first sensor (20), **in that** the working direction of the force from the articulated-arm robot (10) acting on the closure element (12) is identical regardless of the position of the closure element, and **in that** the progression of the angle between the closure element and a component arranged stationarily relative to the second sensor (26) is measured by means of the contactless-operating second sensor (26), or positional changes of the closure element are detected on the basis of a taught movement path of the closure element.

2. The method according to claim 1,
**characterized in that**
a part of the movement sequence or the entire movement sequence of the closure element (12) is determined, by means of the second sensor (26), both during and after the force acting on the closure element by means of the articulated-arm robot (10).

3. The method according to either claim 1 or 2,
**characterized in that**
an idle state, such as the state of closing, of the closure element (12) is determined by means of the second sensor (26).

4. The method according to at least one of the preceding claims,
**characterized in that**
a moment of force or torque sensor (20) is used as the first sensor and/or a laser line sensor (26) is used as the second sensor.

5. The method according to at least one of the preceding claims,
**characterized in that**
a predefined energy is introduced upon the closure element (12) by means of the articulated-arm robot (10).

6. The method according to at least one of the preceding claims,
wherein the closure element (12) is pivoted, during opening and closing, around an axis, which extends from an element, which is arranged stationary to the second sensor (26),
**characterized in that**
during the closing and/or opening of the closure element (12), its angle to the element is measured by means of the second sensor (26).

7. The method according to at least one of the preceding claims,
wherein the closure element is a door (12) of a motor vehicle (14), which is moved during the detection of the at least one characteristic parameter,
**characterized in that**
the articulated-arm robot (10) is moved synchronously with the motor vehicle (16) during detection of the at least one characteristic parameter.

8. The method according to at least one of the preceding claims,
**characterized in that**
the articulated-arm robot (10) interacts with the closure element (12) by means of a sliding element such as a roller or wheel.

9. The method according to at least one of the preceding claims,
**characterized in that**
the articulated-arm robot (10) acts upon the same or virtually the same area of the closure element, regardless of the position of the closure element (12).

10. The method according to at least one of the preceding claims,
**characterized in that**
the area (22) of the closure element (12) interacting with the articulated-arm robot (10) is given by a marking (22) on the closure element, the coordinates of which are determined by means of sensors in the coordinates of the coordinate system of the articulated-arm robot (10).

11. The method according to at least one of the preceding claims,
**characterized in that**
respective coordinates of the marking (22) are determined in at least three different positions of the closure element (12) and the movement path of the closure element is calculated from the at least three positions.

12. The method according to at least one of the preceding claims,
**characterized in that**
the interaction between the closure element and the articulated-arm robot (10) is suspended before the closing process of the closure element (12).

13. The method according to at least one of the preceding claims,
**characterized in that**,
in order to teach the trajectory, an element (18) extending from the articulated-arm robot (10) is connected to the closure element (12) with non-positive locking during an opening or closing process and the point of force application and relative orientation to the closure element remain unchanged during the opening or closing process.

## Revendications

1. Procédé de détection d'au moins un paramètre caractéristique, tel que force de fermeture, énergie de fermeture ou comportement en matière de vitesse, d'un élément de fermeture (12) fermant une ouverture, notamment une porte de véhicule automobile (14), sachant qu'un mouvement est appliqué à l'élément de fermeture (12) par un robot à bras articulé (10) sans qu'une liaison fixe ne soit nécessaire entre l'élément de fermeture et le robot à bras articulé (10), sachant qu'au moins la force interagissant entre l'élément de fermeture et le robot à bras articulé (10) lors du mouvement est déterminée au moyen d'un premier capteur (20) intégré au robot à bras articulé (10) et sachant que les changements de position de l'élément de fermeture (12) sont détectés au moyen d'un second capteur (26) pendant le déroulement du mouvement,
**caractérisé en ce**
**qu'**au moyen du premier capteur (20), les forces et couples apparaissant lors du mouvement entre l'élément de fermeture (12) et le robot à bras articulé (10) sont mesurées en temps réel, que la direction d'action de la force s'exerçant sur l'élément de fermeture (12) par le biais du robot à bras articulé (10) est égale quelle que soit la position de l'élément de fermeture et que la courbe représentative de l'angle entre l'élément de fermeture et un composant disposé à un emplacement fixe par rapport au second capteur (26) est mesurée au moyen du second capteur (26) fonctionnant sans contact, ou que les changements de position de l'élément de fermeture sont détectés sur la base d'une trajectoire de déplacement apprise, de l'élément de fermeture.

2. Procédé selon la revendication 1,
**caractérisé en ce**
**qu'**une partie du déroulement du mouvement ou la totalité du déroulement du mouvement de l'élément de fermeture (12) est déterminée au moyen du second capteur (26), aussi bien pendant qu'après la force s'exerçant sur l'élément de fermeture par le biais du robot à bras articulé (10).

3. Procédé selon la revendication 1 ou 2,
**caractérisé en ce**
**que** l'état de repos, tel que l'état de fermeture, de l'élément de fermeture (12) est déterminé au moyen du second capteur (26).

4. Procédé selon au moins une des revendications précédentes,
**caractérisé en ce**
**qu'**un capteur de force ou de couple (20) est utilisé comme premier capteur et/ou un capteur linéaire laser (26) comme second capteur.

5. Procédé selon au moins une des revendications précédentes,
**caractérisé en ce**
**qu'**une énergie prédéfinie est introduite dans l'élément de fermeture (12) par le biais du robot à bras articulé (10).

6. Procédé selon au moins une des revendications précédentes, sachant que l'élément de fermeture (12) pivote lors de l'ouverture et de la fermeture autour d'un axe qui part d'un élément qui est disposé à un emplacement fixe par rapport au second capteur (26),
**caractérisé en ce**
**que** pendant la fermeture et/ou l'ouverture de l'élément de fermeture (12), son angle par rapport à l'élément est mesuré au moyen du second capteur (26).

7. Procédé selon au moins une des revendications précédentes, sachant que l'élément de fermeture est une porte (12) de véhicule automobile (14), qui est déplacé pendant la détection dudit au moins un paramètre caractéristique
**caractérisé en ce**
**que** le robot à bras articulé (10) est déplacé de manière synchrone au véhicule automobile (14) lors de la détection dudit au moins un paramètre caractéristique.

8. Procédé selon au moins une des revendications précédentes,
**caractérisé en ce**
**que** le robot à bras articulé (10) interagit avec l'élément de fermeture (12) par le biais d'un élément de glissement tel qu'une roulette ou roue.

9. Procédé selon au moins une des revendications précédentes,
**caractérisé en ce**
**que** le robot à bras articulé (10) interagit sur la même zone ou presque sur la même zone de l'élément de fermeture quelle que soit la position de l'élément de fermeture (12).

10. Procédé selon au moins une des revendications précédentes,
**caractérisé en ce**
**que** la zone (22) de l'élément de fermeture (12) interagissant avec le robot à bras articulé (10) est prédéfinie par un repère (22) sur l'élément de fermeture dont les coordonnées sont déterminées au moyen d'un système de capteurs en des coordonnées du système de coordonnées du robot à bras articulé (10).

11. Procédé selon au moins une des revendications précédentes,
**caractérisé en ce**
**que** les coordonnées respectives du repère (22) sont déterminées dans au moins trois positions différentes de l'élément de fermeture (12) et que la trajectoire du mouvement de l'élément de fermeture est calculée à partir desdites au moins trois positions.

12. Procédé selon au moins une des revendications précédentes,
**caractérisé en ce**
**que** l'interaction entre l'élément de fermeture et le robot à bras articulé (10) est supprimée avant le processus de fermeture de l'élément de fermeture (12).

13. Procédé selon au moins une des revendications précédentes,
**caractérisé en ce**
**que** pour apprendre une trajectoire, un élément (18) partant du robot à bras articulé (10) est relié par liaison de force à l'élément de fermeture (12) pendant un processus d'ouverture ou de fermeture et que pendant le processus d'ouverture ou de fermeture, le point d'application de la force et l'orientation relative par rapport à l'élément de fermeture restent inchangés.
